# EUROPEAN PATENT APPLICATION

(11) **EP 4 764 809 A1**
(43) Date of publication of application: **24.06.2026**
(21) Application number: 24857646.4
(22) Date of filing: 26.02.2024
(51) Int. Cl.: G06F 3/06

(54) **OBJECT STORAGE SYSTEM, DATA PROCESSING METHOD AND RELATED DEVICE**

(30) Priority: 28.08.2023 CN 202311092359; 29.12.2023 CN 202311865861
(71) Applicant: Huawei Cloud Computing Technologies Co., Ltd., Gui'an New District, Guizhou 550025 (CN)
(72) Inventor: SONG, Yuheng, Shenzhen, Guangdong 518129 (CN); XIE, Xiaoqin, Shenzhen, Guangdong 518129 (CN); WU, Huatao, Shenzhen, Guangdong 518129 (CN)
(74) Representative: Epping - Hermann - Fischer
(86) International application number: PCT/CN2024/078474
(87) International publication number: WO 2025/044090

(57) **Abstract**

This application provides an object storage system. The object storage system includes a service layer, a persistence layer, and a metadata layer. The service layer is configured to: receive a batch upload request sent by a client, where the batch upload request indicates a plurality of to-be-uploaded first objects; send data of the plurality of first objects to the persistence layer; and generate metadata of the plurality of first objects, and send the metadata of the plurality of first objects to the metadata layer. The persistence layer is configured to store the data of the plurality of first objects. The metadata layer is configured to: store the metadata of the plurality of first objects into the persistence layer; and determine that metadata of at least one first object fails to be stored into the persistence layer, and send first indication information to the service layer, where the first indication information indicates to perform garbage collection on the plurality of first objects. In this way, in the object storage system, atomicity of a batch operation on the plurality of objects is implemented based on guarantee of atomically storing the metadata of the plurality of objects into the persistence layer.

## Description

This application claims priorities to Chinese Patent Application No. 202311092359.1, filed with the China National Intellectual Property Administration on August 28, 2023 and entitled "OBJECT OPERATION METHOD AND APPARATUS, AND ANOTHER DEVICE", and to Chinese Patent Application No. 202311865861.1, filed with the China National Intellectual Property Administration on December 29, 2023 and entitled "OBJECT STORAGE SYSTEM, DATA PROCESSING METHOD, AND RELATED DEVICE", both of which are incorporated herein by reference in their entireties.

### TECHNICAL FIELD

This application relates to the field of storage technologies, and in particular, to an object storage system, a data processing method, and a related device.

### BACKGROUND

Object storage service (Object Storage Service, OBS) is an object-based storage service that provides massive, secure, cost-effective, and highly reliable unstructured storage. The use of the object storage service does not need to consider capacity restrictions. In addition, the object storage service provides a plurality of storage types, and can meet requirements in various service scenarios.

Atomicity guarantee means that one or more operations in a transaction are either all successfully performed or all unsuccessfully performed, and there is no intermediate state. In object storage, there may be a plurality of object upload operations or object deletion operations in a batch operation. Atomicity guarantee means that all the plurality of operations are either succeed or fail.

However, in object storage, there is no atomicity guarantee for a plurality of object upload operations or object deletion operations. The lack of atomicity may lead to inconsistent experience of users. For example, users successfully access metadata but corresponding data fails to be uploaded, resulting in a data access failure for the users.

### SUMMARY

This application provides an object storage system, to implement atomicity of a batch operation on a plurality of objects based on guarantee of atomically storing metadata of the plurality of objects into a persistence layer in a batch object operation. In addition, this application further provides a data processing method, a computing device cluster, a computer-readable storage medium, and a computer program product.

According to a first aspect, this application provides an object storage system. The object storage system is configured to provide an object storage service by using at least one bucket. The object storage system includes a service layer, a persistence layer, and a metadata layer. The service layer is configured to: receive a batch upload request sent by a client, where the batch upload request indicates a plurality of to-be-uploaded first objects; send data of the plurality of first objects to the persistence layer; and generate metadata of the plurality of first objects, and send the metadata of the plurality of first objects to the metadata layer. The persistence layer is configured to store the data of the plurality of first objects. The metadata layer is configured to: store the metadata of the plurality of first objects into the persistence layer; and determine that metadata of at least one first object fails to be stored into the persistence layer, and send first indication information to the service layer, where the first indication information indicates to perform garbage collection on the plurality of first objects.

In this embodiment, after receiving the batch upload request, the service layer first stores, into the persistence layer, the data of the plurality of first objects indicated by the batch upload request, and then the metadata layer atomically stores the metadata of the plurality of first objects into the persistence layer. Only when the metadata of each of the plurality of first objects is successfully stored into the persistence layer, the service layer returns, to the client, that the objects are successfully uploaded in batches. If the metadata of the at least one of the plurality of first objects fails to be stored into the persistence layer, the service layer indicates to perform garbage collection on the data of the plurality of first objects, in other words, to roll back to a state in which the plurality of first objects are not uploaded. In this way, atomicity of uploading the plurality of objects in batches is implemented based on separately writing the data and the metadata into the persistence layer in the object storage system and guarantee of atomically storing the metadata of the plurality of objects into the persistence layer.

With reference to the first aspect, in some implementations of the first aspect, the service layer is further configured to determine partition keys of the plurality of first objects, where the partition keys indicate partitions of the metadata of the plurality of first objects. The metadata layer is specifically configured to store the metadata of the plurality of first objects into the persistence layer based on the partition keys of the plurality of first objects.

In this implementation, before atomically storing the metadata of the plurality of first objects into the persistence layer, the metadata layer needs to determine the partition keys of the plurality of first objects. After the partition keys of the plurality of first objects are determined to obtain the partitions of the metadata of the plurality of first objects, the metadata of the plurality of first objects is stored into the persistence layer by using different atomicity strategies, to guarantee atomicity of uploading objects in batches.

With reference to the first aspect, in some implementations of the first aspect, the metadata layer is configured to: store, into the persistence layer by using a write-ahead log, metadata of first objects belonging to a same partition; and store, into the persistence layer by using a distributed transaction, metadata of first objects belonging to different partitions.

In this implementation, in an operation for uploading objects in batches, for object metadata in a same partition, a batch object atomic operation is guaranteed by using the write-ahead log, and for writing of object metadata in different partitions, each partition in different partitions is used as a whole to participate in the distributed transaction, so as to implement a batch object atomic operation. In this way, a quantity of distributed transaction participants is greatly reduced, and this help stabilize performance of the distributed transaction.

With reference to the first aspect, in some implementations of the first aspect, the service layer is configured to determine the partition keys of the plurality of first objects according to a partition key rule of a bucket to which the plurality of first objects belong.

In this implementation, a user may customize a partition key rule when creating a bucket, so that the user differentiates a distribution relationship between objects by using the partition key rule.

With reference to the first aspect, in some implementations of the first aspect, the service layer is further configured to: before determining the partition keys of the plurality of first objects according to the partition key rule of the bucket to which the plurality of first objects belong, receive a bucket creation request sent by the client, where the bucket creation request includes a bucket name of a target bucket and a target partition key rule; and send, to the metadata layer, a first mapping relationship between the bucket name of the target bucket and the target partition key rule. The metadata layer is further configured to store the first mapping relationship.

With reference to the first aspect, in some implementations of the first aspect, the service layer is further configured to: receive a batch deletion request sent by the client, where the batch deletion request indicates a plurality of to-be-deleted second objects; and send metadata of the plurality of second objects to the metadata layer, where the metadata of the plurality of second objects includes a delete marker. The metadata layer is further configured to: store the metadata of the plurality of second objects into the persistence layer, and determine that metadata of at least one second object fails to be stored into the persistence layer, and send second indication information to the service layer, where the second indication information indicates to give up performing garbage collection on data of the plurality of second objects.

In this implementation, after receiving the batch deletion request, the service layer atomically stores, into the persistence layer, the metadata of the plurality of second objects indicated by the batch deletion request. When the metadata of each of the plurality of second objects is successfully stored into the persistence layer, the service layer returns, to the client, that the objects are successfully deleted in batches. If the metadata of the at least one of the plurality of second objects fails to be stored into the persistence layer, the service layer indicates to give up performing garbage collection on the data of the plurality of first objects. In this way, atomicity of deleting the plurality of objects in batches is implemented based on separately writing the data and the metadata into the persistence layer in the object storage system and guarantee of atomically storing the metadata of the plurality of objects into the persistence layer.

With reference to the first aspect, in some implementations of the first aspect, the service layer is further configured to store the first mapping relationship into a partition cache.

With reference to the first aspect, in some implementations of the first aspect, the service layer is configured to: query, in the first mapping relationship stored in the partition cache, the partition key rule of the bucket to which the plurality of first objects belong, to determine the partition keys of the plurality of first objects.

In this implementation, the service layer stores the partition key rule into the partition cache, to avoid accessing bucket metadata on each read request of the partition key, so that overheads for accessing the metadata layer are reduced, and read performance of the partition key is improved.

With reference to the first aspect, in some implementations of the first aspect, the service layer is further configured to: upon a lookup miss on the first mapping relationship stored in the partition cache, query, in the metadata layer, the partition key rule of the bucket to which the plurality of first objects belong, to determine the partition keys of the plurality of first objects.

According to a second aspect, a data processing method is provided. The method is applied to an object storage system. The object storage system is configured to provide an object storage service by using at least one bucket. The object storage system includes a service layer, a persistence layer, and a metadata layer. The method includes: The service layer receives a batch upload request sent by a client, where the batch upload request indicates a plurality of to-be-uploaded first objects. The service layer sends data of the plurality of first objects to the persistence layer. The persistence layer stores the data of the plurality of first objects. The service layer generates metadata of the plurality of first objects, and sends the metadata of the plurality of first objects to the metadata layer. The metadata layer stores the metadata of the plurality of first objects into the persistence layer. The metadata layer determines that metadata of at least one first object fails to be stored into the persistence layer, and sends first indication information to the service layer, where the first indication information indicates to perform garbage collection on the plurality of first objects.

With reference to the second aspect, in some implementations of the second aspect, the service layer determines partition keys of the plurality of first objects, where the partition keys indicate partitions of the metadata of the plurality of first objects.

With reference to the second aspect, in some implementations of the second aspect, the metadata layer stores, into the persistence layer by using a write-ahead log, metadata of first objects belonging to a same partition. The metadata layer stores, into the persistence layer by using a distributed transaction, metadata of first objects belonging to different partitions.

With reference to the second aspect, in some implementations of the second aspect, the service layer determines the partition keys of the plurality of first objects according to a partition key rule of a bucket to which the plurality of first objects belong.

With reference to the second aspect, in some implementations of the second aspect, before determining the partition keys of the plurality of first objects according to the partition key rule of the bucket to which the plurality of first objects belong, the service layer receives a bucket creation request sent by the client, where the bucket creation request includes a bucket name of a target bucket and a target partition key rule. The service layer sends, to the metadata layer, a first mapping relationship between the bucket name of the target bucket and the target partition key rule. The metadata layer stores the first mapping relationship.

With reference to the second aspect, in some implementations of the second aspect, the service layer receives a batch deletion request sent by the client, where the batch deletion request indicates a plurality of to-be-deleted second objects. The service layer sends metadata of the plurality of second objects to the metadata layer, where the metadata of the plurality of second objects includes a delete marker. The metadata layer stores the metadata of the plurality of second objects into the persistence layer. The metadata layer determines that metadata of at least one second object fails to be stored into the persistence layer, and sends second indication information to the service layer, where the second indication information indicates to give up performing garbage collection on data of the plurality of second objects.

With reference to the second aspect, in some implementations of the second aspect, the service layer stores the first mapping relationship into a partition cache.

With reference to the second aspect, in some implementations of the second aspect, the service layer queries, in the first mapping relationship stored in the partition cache, the partition key rule of the bucket to which the plurality of first objects belong, to determine the partition keys of the plurality of first objects.

With reference to the second aspect, in some implementations of the second aspect, the service layer queries, in the metadata layer upon a lookup miss on the first mapping relationship stored in the partition cache, the partition key rule of the bucket to which the plurality of first objects belong, to determine the partition keys of the plurality of first objects.

For technical principles and beneficial effects of the second aspect, refer to related descriptions of the first aspect. Details are not described herein again.

According to a third aspect, this application provides a computing device cluster, including at least one computing device. Each computing device includes a processor and a memory. A processor of the at least one computing device is configured to execute instructions stored in a memory of the at least one computing device, to cause the computing device cluster to perform the method according to any one of the second aspect or the implementations of the second aspect.

According to a fourth aspect, this application provides a computer program product including instructions. When the instructions are run by a computer device cluster, the computer device cluster is caused to perform the method according to any one of the second aspect or the implementations of the second aspect.

According to a fifth aspect, this application provides a computer-readable storage medium, including computer program instructions. When the computer program instructions are executed by a computing device cluster, the computing device cluster performs the method according to any one of the second aspect or the implementations of the second aspect.

### BRIEF DESCRIPTION OF DRAWINGS

To describe technical solutions in embodiments of this application or in the background more clearly, the following briefly describes the accompanying drawings used in embodiments of this application or the background.
FIG. 1 is a diagram of a scenario of an object storage system according to this application;
FIG. 2 is a diagram of an architecture of an object storage system according to this application;
FIG. 3 is a diagram of a structure of range partitions according to this application;
FIG. 4 is a diagram of a hardware structure of an object storage system according to this application;
FIG. 5 is a diagram of a scenario of an object storage system according to this application;
FIG. 6 is a schematic flowchart of a data processing method according to this application;
FIG. 7 is a diagram of a batch operation configuration interface according to this application;
FIG. 8 is a schematic flowchart of a data processing method according to this application;
FIG. 9 is a schematic flowchart of a distributed transaction according to this application;
FIG. 10 is a schematic flowchart of a data processing method according to this application;
FIG. 11 is a schematic flowchart of a data processing method according to this application;
FIG. 12 is a diagram of a structure of an object storage system according to this application;
FIG. 13 is a diagram of a structure of a computing device according to this application;
FIG. 14 is a diagram of a structure of a computing device cluster according to this application; and
FIG. 15 is a diagram of a structure in which computing devices are connected via a network according to this application.

### DESCRIPTION OF EMBODIMENTS

The following describes technical solutions in embodiments of this application with reference to the accompanying drawings in embodiments of this application.

In the descriptions of embodiments of this application, unless otherwise specified, the term "and/or" in this specification is used to describe an association relationship between associated objects, and represents that three relationships may exist. For example, A and/or B may represent the following three cases: Only A exists, both A and B exist, and only B exists. The character "/" in this specification indicates an "or" relationship between the associated objects. For example, A/B indicates A or B. A and B may be singular or plural.

In the descriptions of embodiments of this application, unless otherwise specified, the term "a plurality of" in this specification means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. For example, a plurality of processing units mean two or more processing units, and a plurality of elements mean two or more elements.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, terms such as "example" or "for example" are used to represent giving examples, illustrations, or descriptions. Any embodiment or design solution described as an "example" or "for example" in embodiments of this application should not be explained as being more preferred or having more advantages than another embodiment or design solution. Specifically, the terms such as "example" or "for example" are used to present related concepts in a specific manner.

In the descriptions of embodiments of this application, unless otherwise specified, "a plurality of" means two or more. To make the technical solutions provided in this application clearer, before the technical solutions provided in this application are specifically described, related terms are first explained.
(1) Object storage service (object storage service, OBS): The object storage service is a service of storing data in the form of objects in object storage nodes. The object storage node provides a storage bucket-based and object-based flat storage mode. All objects in the storage bucket are at a same logical layer, in which a multi-level tree directory structure in a file storage serving node is eliminated. An object storage system is configured to provide users with operations that comply with object semantics (that is, object services), such as uploading objects, downloading objects, listing each object in a bucket, copying objects, moving objects, renaming objects, deleting objects, deleting each object in a bucket, and deleting a plurality of specified objects. The object storage node provides an object interface, and the object interface may indicate operations that comply with object semantics. For example, the object interface may be a representational state transfer (representational state transfer, REST) application programming interface (application programming interface, API), and a user may access data on an object storage serving node through the REST API interface. It should be noted that when the user accesses data through an object interface, the data may be referred to as an object.
(2) Object (object): The object is a basic unit of data storage in an object storage system. One object is a collection of file data and related attribute information (metadata) of one file. Data uploaded by a tenant to an OBS is stored in a bucket as an object. An object includes three parts: key value (key), metadata (metadata), and data (data). The key value is an object name. For example, the key is a character sequence encoded in UTF-8 with a length greater than 0 and not exceeding 1024. Each object in a bucket has a unique object key value.
(3) Bucket (bucket): The bucket is a container for storing objects in an OBS. Object storage provides a storage bucket-based and object-based flat storage mode. All objects in the bucket are at a same logical layer, in which a multi-level tree directory structure in a file system is eliminated. Each bucket has respective attributes such as a storage class, an access permission, and a region to which the bucket belongs. Tenants may create buckets with different storage classes and access permissions and configure more advanced attributes to meet storage requirements in different scenarios.
(4) Object storage device (object storage device, OSD): The OSD is a basic storage unit of an object storage system, disposed on a physical disk. The OSD is specifically storage space with a fixed size in the physical disk. The object storage system manages physical disks of a plurality of computing devices in the form of OSD.
(5) Range partition (range partition): For a cluster that stores metadata, to meet the requirement of an increasing quantity of metadata entries, the metadata is usually dynamically divided by using a partitioning technology, and each partition (partition) obtained through the division manages different data entries. Each partition is served by one server. A mapping relationship between a partition and a server is dynamically specified by cluster management of a distributed metadata storage system. In the partitioning technology, a partition is usually determined by fixedly using a value of an attribute of metadata or a sequentially combined value of several attributes. Therefore, the value is referred to as a partition key (partition key or shard key).

In an object storage service, a tenant may log in to a cloud management platform on a public cloud access page by using a pre-registered account and password. After the login succeeds, the tenant may select and purchase corresponding public cloud services on the public cloud access page, for example, an OBS, a virtual machine service, and a container service. For the OBS, the tenant may further create a plurality of buckets through a configuration interface or an API on the public cloud access page provided by the cloud platform. A total quantity and a total size of objects stored in each bucket are not limited, and the tenant does not need to consider data scalability. The OBS is a service based on a REST API and a hypertext transfer protocol (hypertext transfer protocol, HTTP) or a hypertext transfer protocol secure (hypertext transfer protocol secure, HTTPS) protocol. The tenant may locate a bucket resource by using a uniform resource locator (uniform resource identifier, URI), also referred to as access domain name or domain name for short in this application. In the OBS, a bucket name is globally unique and cannot be modified. To be specific, a name of a bucket created by the tenant cannot be the same as a name of another bucket that has been created by the tenant and cannot be the same as a name of a bucket created by another tenant.

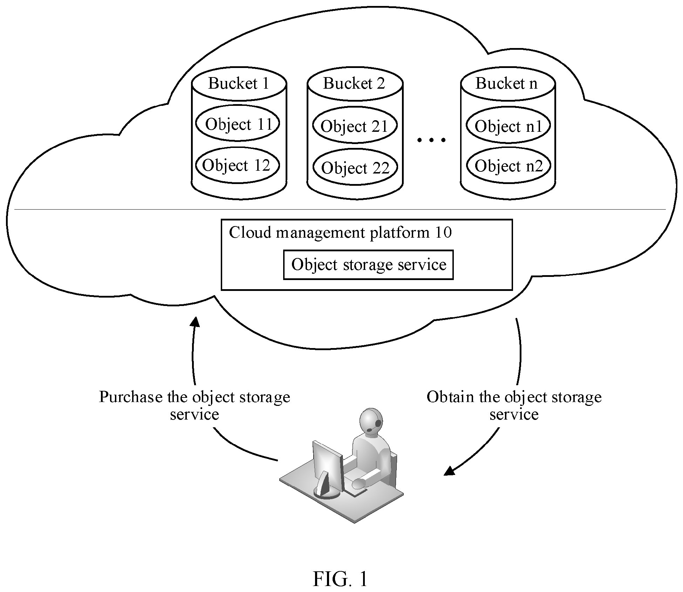

FIG. 1 is a diagram of at least one application scenario according to an embodiment of this application. As shown in FIG. 1, each bucket may include a plurality of objects, and the objects in the buckets are isolated from each other. A tenant logs in to a cloud management platform 10 via a client, selects and purchases a cloud service of an object storage service on the cloud management platform 10, and after the purchase, the tenant may perform object storage based on the object storage service provided by an object storage system. The cloud management platform 10 is mainly configured to manage an infrastructure for running the object storage service. For example, the infrastructure for running the object storage service may include a plurality of data centers disposed in different regions, and each data center includes a plurality of servers. The data center may provide a basic resource for the object storage service, for example, a computing resource or a storage resource. Therefore, when purchasing and using the object storage service, the tenant pays for used resources. Specifically, the object storage service provides a domain name of a bucket. The tenant may access the domain name of the bucket via the client, to upload data to the bucket or download data from the bucket. The uploaded data is stored in the bucket in the form of objects.

When uploading an object, the tenant may specify a storage class for the object. If no storage class is specified, the storage class of the object is consistent with a storage class of the bucket by default. After the object is uploaded, the storage class of the object may be modified and the bucket may be accessed via the client. The client may be a locally used browser of the tenant or a dedicated client provided by a cloud platform. For example, the tenant may access a bucket by using a browser set on a local computer. After an account is entered and verified, the tenant may use the browser to upload an object to the bucket, or perform an operation such as modifying or deleting an object in the bucket. The local computer is connected to an internet.

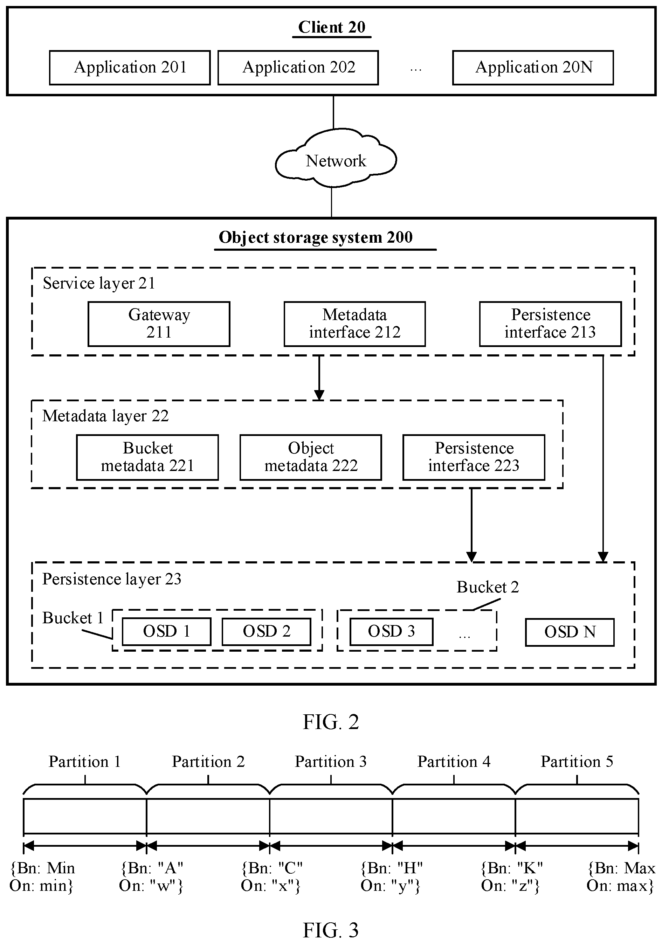

The following describes, with reference to FIG. 2, a system architecture to which an embodiment of this application is applicable. An object storage system 200 may provide an object storage service for a client 20. Refer to FIG. 2. The object storage system 200 includes a service layer 21, a metadata layer 22, and a persistence layer 23.

The service layer 21 is configured to interact with the client 20, and provide a foreground service externally. The foreground service may be a service in which the client 20 requests to read data or write data. The client 20 may be deployed on a terminal device, and a plurality of applications may be further deployed on the terminal device. An example of an application 201 is used. The application 201 may be deployed on a terminal device of a user. For example, the terminal device may be a mobile phone, a notebook computer, a tablet computer, a palmtop computer, a wireless terminal in a smart city, or a wireless device in a smart home. A specific type of the terminal device is not limited in this application. The client 20 may interact with the application 201. For example, the application 201 may send an object upload request to the client 20 under triggering of a tenant. After receiving the object upload request, the client 20 may send an object upload request to the application 201 based on the object upload request.

The tenant may log in to a cloud management platform using an account on client 20, and create a bucket and configure a bucket name by using the cloud management platform, to obtain a bucket domain name. After an operation (for example, creating a bucket or configuring a bucket name) of the tenant is detected, the cloud management platform may deliver a creation instruction to the service layer 21 via a switching device, the creation instruction includes information such as the bucket name and the bucket domain name, and instructs an object storage serving node to create a bucket and store the information such as the bucket name and the bucket domain name. After the bucket is created, the tenant may further access the bucket domain name by operating the client 20, locate the bucket managed by the service layer 21, and upload data (for example, upload an object) and download data (for example, download an object) in the bucket.

The following specifically describes the service layer 21. The service layer 21 includes a gateway 211, a metadata interface 212, and a persistence layer interface 213. The gateway 211 is responsible for object storage access, verification, authentication, and protocol processing. The metadata interface 212 is an interface of the metadata layer 22. Metadata corresponding to data written by the tenant may be written to the metadata layer 22 through the metadata interface 212, and the metadata is finally persisted to the persistence layer 23. At the persistence layer 23, the metadata is generally stored in the form of copy, and a plurality of copies (generally three copies) of the data are stored. When a copy is lost, the data may be obtained by copying another copy. The persistence layer interface 213 is an interface of the persistence layer 23, and data that the tenant needs to write may be written to the persistence layer 23 through the persistence layer interface 213. At the persistence layer 23, the data is generally stored in an erasure coding (erasure coding, EC) encoding form. Original data is encoded to obtain redundancy, and the data and the redundancy are stored into the persistence layer 23, so as to achieve fault tolerance.

Object metadata is generally sorted in lexicographic order by a distributed storage engine based on range partitions. The metadata layer 22 includes bucket metadata 221, object metadata 222, and a persistence interface 223. For a cluster that stores metadata, to meet a requirement of an increasing quantity of metadata entries, the metadata is usually dynamically divided by using a partitioning technology, and each partition (also referred to as a partition) obtained through the division manages different data entries. One server provides a service for each partition. A belonging relationship between a partition and a server is dynamically specified by cluster management of a distributed metadata storage system. Dynamic horizontal expansion of the distributed metadata storage system is implemented through dynamic partitioning and dynamic partition ownership. In the partitioning technology, a partition is usually determined by fixedly using a value of an attribute of metadata, a sequentially combined value of several attributes, or a customized rule. The value may be referred to as a partition key. The rule is stored in the bucket metadata 221. During adding, deletion, modification, and query, a partition key of each data entry is queried in a range partition to uniquely determine a partition in which the data entry is located. In addition, the bucket metadata 221 further records metadata information of a bucket, for example, a region (region) to which the bucket belongs. The object metadata 222 records metadata of an object, for example, an attribute, a size, upload time, and strategy information of the object. The object metadata 222 further includes a write-ahead log (write-ahead log, WAL). The write-ahead log requires that a modification operation of the storage system be written into the log (log) before being committed, to guarantee atomicity and durability of the object storage system. If data on a disk is not damaged, the write-ahead log allows the storage system to restore to a state before the crash under the guidance of the log, to avoid a data loss. This technology is widely applied to a (file, object, database, or column) storage system for storing metadata information.

To guarantee that the metadata of the object can be arranged in a natural order of partition keys, a range partitioning technology is usually used in a distributed storage system. In the partitioning technology, a partition is usually determined by fixedly using a value of a column in a data table or a sequentially combined value of several column values. As shown in Table 1 user metadata table, a combination of "bucket name", "object name", and "object version number" in the metadata table uniquely identifies an object, in other words, an identifier of an object is {bucket name, object name, object version number} . A combined value of three column fields {Bn, On, ver} uniquely identifies an object, and an object entry key value is {Bn, On, ver}. To adapt to a continuous increase of an object data scale, a combined value of a prefix column field {Bn, On} of a primary index entry key value is generally used as a partition key, to facilitate index partitioning based on the primary index entry key value. Although each object entry has a partition key, the partition key is not required to be unique. In the example in Table 1:
a partition key of a data entry in a 1^{st} row is {Bn="A", On="0109"};
a partition key of a data entry in a 2^{nd} row is {Bn="A", On="0109"}, and the partition key is the same as that of the 1^{st} row, but entry key values are different; and
a partition key of a 3^{rd} data entry is {Bn="B", On="0201"}.

**Table 1: user metadata table**

| Bucket name (Bucket Name, Bn) | Object name (Object Name, On) | Version (Version, ver) |
|---|---|---|
| "A" | "0019" | 1 |
| "B" | "0019" | 2 |
| "C" | "0201" | 1 |

The partition key of the data entry in the 2^{nd} row in Table 1 is the same as the partition key of the data entry in the 1^{st} row. Therefore, metadata represented by the data entry in the 1^{st} row and metadata represented by the data entry in the 2^{nd} row belong to a same partition. However, an identifier of an object represented by the data entry in the 1^{st} row is different from an identifier of an object represented by the data entry in the 2^{nd} row.

For metadata at partition boundary points, a partition to which the metadata belongs is determined by using a left-closed and right-open principle or a left-open and right-closed principle. For example, FIG. 3 shows a structure of range partitions. In Table 1, Bn represents a bucket name, and On represents an object name. For the metadata at the partition boundary points, if a partition to which the metadata belongs is determined by using the left-closed and right-open principle, a value range of a partition key of a partition 1 is ({Bn: Min; on: min}, {Bn: "A"; on: "w"}], and a value range of a partition key of a partition 2 is ({Bn: "A"; on: "w"}, {Bn: "C"; on: "x"}].

In the persistence layer 23, a control unit of an object storage device OSD configures a physical disk as a plurality of object storage devices OSDs. In this application, only an example in which the OSD is a basic storage unit is used, and any storage space that can be used as the basic storage unit is applicable to this application. After receiving a creation instruction for a bucket 1, and after creating the bucket 1, the cloud management platform creates the bucket 1 on a physical disk 1 and a physical disk 2. OSDs of the bucket 1 are distributed in the physical disk 1 and the physical disk 2, and stores information such as a bucket name and a bucket domain name of the bucket 1.

For example, the service layer 21, the metadata layer 22, and the persistence layer 23 may be implemented by software, or may be implemented by hardware.

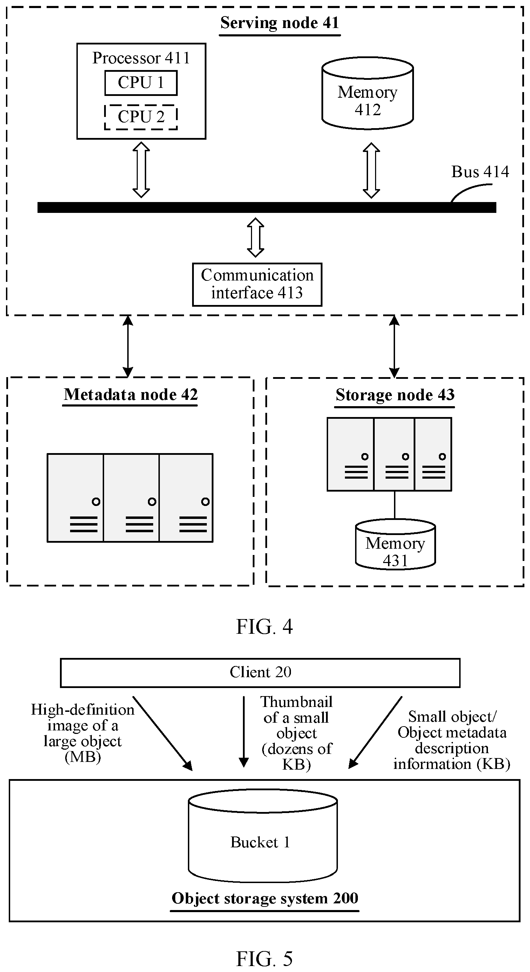

When implemented by hardware, the service layer 21, the metadata layer 22, and the persistence layer 23 may all be implemented by at least one computing device, for example, implemented by a server. Refer to FIG. 4. The following describes a hardware structure of the object storage system 200 in this application. When the service layer 21, the metadata layer 22, and the persistence layer 23 are implemented by a server, the service layer 21 is deployed on a serving node 41, the metadata layer 22 is deployed on a metadata node 42, and the persistence layer 23 is deployed on a storage node 43. The following describes a hardware structure of the serving node 41. Components shown in FIG. 4 may be implemented in hardware, software, or a combination of hardware and software that includes one or more signal processing and/or application-specific integrated circuits. As shown in FIG. 4, the serving node 41 may include a processor 411, a memory 412, and a communication interface 413. The processor 411, the memory 412, and the communication interface 413 may be connected to each other via a bus 414, or may be connected to each other in another manner.

The processor 411 is a control center of the serving node. The processor 411 may be a general-purpose central processing unit (central processing unit, CPU), another general-purpose processor, or the like. The general-purpose processor may be a microprocessor, any conventional processor, or the like. For example, the processor 411 may include an application processor (application processor, AP), a graphics processing unit (graphics processing unit, GPU), an image signal processor (image signal processor, ISP), a controller, and the like. The controller in the processor 411 is a nerve center and a command center of the serving node. The controller may generate an operation control signal based on an instruction operation code and a time sequence signal, to complete control of instruction fetching and instruction execution. Optionally, a memory may be further disposed in the processor 411, and is configured to store instructions and data. For example, the processor 411 may include one or more CPUs, for example, CPU 1 and CPU 2 shown in FIG. 4.

The memory 412 includes but is not limited to a random access memory (random access memory, RAM), a read-only memory (read-only memory, ROM), an erasable programmable read-only memory (erasable programmable read-only memory, EPROM), a flash memory, an optical memory, or any other medium that can be used to carry or store expected program code in the form of instructions or data structures and that can be accessed by a computer. In this embodiment of this application, the memory 412 may store information such as computer instructions.

The communication interface 413 may be a transceiver module, and is configured to communicate with another device or a communication network, for example, communicate with an ethernet, a RAN, or a wireless local area network (wireless local area network, WLAN). The communication interface 413 may receive instructions, a message, data, or the like. The transceiver module may be an apparatus, for example, a transceiver or a transceiver machine. Optionally, the communication interface 413 may alternatively be a transceiver circuit located in a processor 201, and is configured to implement signal input and signal output of the processor. The communication interface 413 may be a wired interface (port), for example, a fiber distributed data interface (fiber distributed data interface, FDDI) or a gigabit ethernet (gigabit ethernet, GE) interface. Alternatively, the communication interface 413 may be a wireless interface.

The bus 414 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one thick line is used to represent the bus in FIG. 4, but this does not mean that there is only one bus or only one type of bus.

In addition, the storage node 43 may include a memory 431. The memory 431 may further include a non-volatile memory (non-volatile memory), for example, a read-only memory (read-only memory, ROM), a flash memory, a hard disk drive (hard disk drive, HDD), or a solid-state drive (solid-state drive, SSD).

It should be noted that the serving node 41 shown in FIG. 4 is merely an example of the serving node. The serving node may have more or fewer components than those shown in FIG. 4, may combine two or more components, or may have different component configurations. In actual application, the object storage system 200 may alternatively be applicable to another scenario. For example, in another possible application scenario, the object storage system 200 may provide an object storage service for more clients, or provide an object storage service for another type of client. Alternatively, the object storage system 200 may further include an apparatus with another function to support this embodiment. This is not limited herein.

In standard object storage, an object application programming interface (Application Programming Interface, API) uses a single object as an operation granularity, for example, uploading or deleting an object, and atomicity guarantee of the single object can be implemented. For a write operation the single object, an operation of a tenant includes two operations in the storage system: data write and metadata write. A result of the write operation of the tenant is determined depending on whether metadata is successfully written. After specific data of the tenant is written into the persistence layer 21, generated metadata is processed by the metadata layer 22. After receiving a request, the metadata layer 22 records a metadata operation and the metadata in the WAL log. After the writing succeeds, the metadata layer 22 returns an operation result to the service layer 21. After receiving a response indicating that the metadata is successfully written, the service layer 21 returns a final operation result to the user. Therefore, a result of a write operation of the user is usually determined depending on whether the metadata is successfully written.

However, in an actual application, the tenant may have a requirement for performing a batch operation on a plurality of objects. In object storage, there is no atomicity guarantee for a plurality of object upload batch operations or object deletion batch operations. The lack of atomicity may lead to inconsistent experience of users. For example, the users successfully access metadata, but corresponding data fails to be uploaded. As a result, the users fail to access the data.

For ease of understanding, the following first describes at least one application scenario of embodiments of this application.

For example, FIG. 5 is a diagram of at least one application scenario according to an embodiment of this application. As shown in FIG. 5, a tenant logs in to a cloud management platform by using an account on a client 20, uploads a plurality of high-definition image objects to a bucket 1 in batches via the cloud management platform, and writes a single image object and a description information object of the image object into the bucket 1 separately. Alternatively, for a same image object, thumbnail objects of different resolutions need to be separately written into the bucket 1. However, in an object storage system 200, there is no atomicity guarantee for a batch operation on a plurality of objects. For example, the image object and the description information object of the image object are written into the bucket 1 separately. If the description information of the image object is successfully written, but the image object fails to be written, the tenant can access only the description information of the image object, but cannot access the image object. As a result, the tenant fails to access the image object, and use experience of the tenant is poor.

To resolve the problem that there is no atomicity guarantee for the batch operation on the plurality of objects, embodiments of this application provide a data processing method, to implement atomicity of the batch operation on the plurality of objects based on separately writing data and metadata in an object storage system and guarantee of atomically writing metadata of the plurality of objects.

Next, based on the content described above, a data processing method provided in embodiments of this application is described. It may be understood that the method is proposed based on the content described above. For some or all content in the method, refer to the foregoing descriptions.

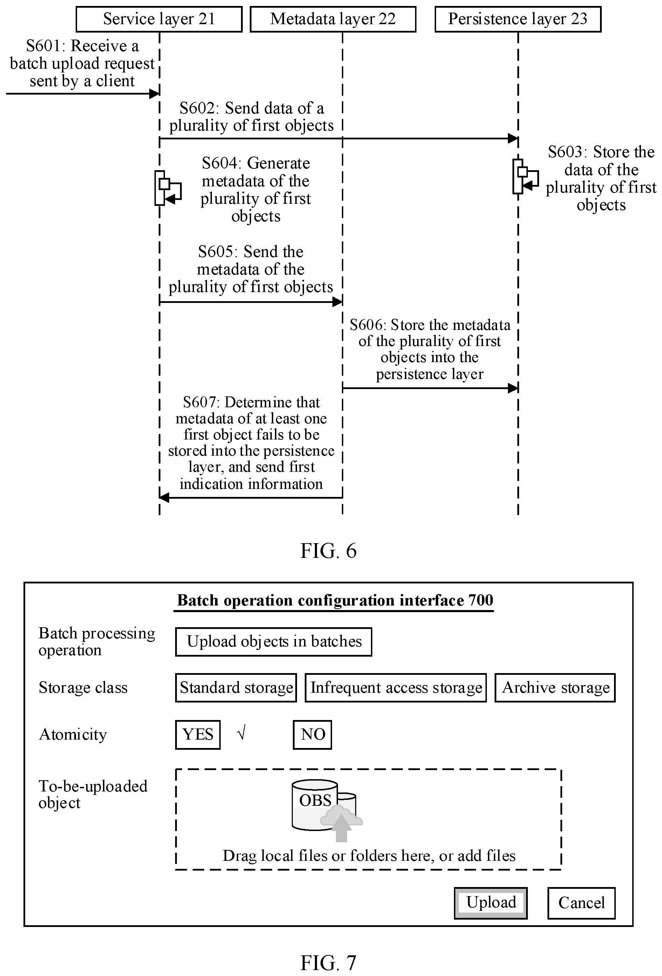

For example, FIG. 6 is a schematic flowchart of a data processing method according to an embodiment of this application. It may be understood that the method may be implemented in any suitable apparatus, device, platform, or device cluster that has computing, processing, and storage capabilities. As shown in FIG. 6, the method may include steps S601 to S606.

Step S601: A service layer receives a batch upload request sent by a client.

In this embodiment, the service layer of an object storage system receives the batch upload request from the client. The batch upload request indicates a plurality of to-be-uploaded first objects. The batch upload request carries the plurality of to-be-uploaded first objects. In the object storage system, the service layer may be a service layer 21, the client may be a client 20, a persistence layer may be a persistence layer 23, and a metadata layer may be a metadata layer 22. The following uses this as an example for description.

Optionally, a gateway 211 of the service layer 21 receives the batch upload request, and sends the plurality of to-be-uploaded first objects carried in the batch upload request to a persistence interface 212. The persistence interface 212 is responsible for writing data of the plurality of first objects into the persistence layer 23.

Optionally, as shown in FIG. 7, the client provides a batch operation configuration interface 700. The batch configuration interface is configured to receive a batch operation configuration instruction of a user for an object, to cause the service layer to perform batch operation processing and atomicity configuration according to the batch operation configuration instruction. Items that can be configured by the user on the batch operation configuration interface 700 include batch processing operation, storage class, atomicity, to-be-uploaded object, and the like. Storage classes may include standard storage, infrequent access storage, and archive storage. This is not specifically limited in this embodiment of this application. In this embodiment, the user may choose to upload objects in batches. When choosing to upload the objects in batches, the user may set, by enabling or disabling atomicity, whether atomicity guarantee needs to be performed for the objects to be uploaded in batches.

Step S602: The service layer sends the data of the plurality of first objects to the persistence layer.

In this embodiment, after receiving the batch upload request from the client, the service layer sends the data of the plurality of objects to the persistence layer in response to the batch upload request. The object includes three parts: key value, metadata, and data. The data is data content of a file. After receiving the batch upload request, the service layer first sends the data of the plurality of first objects to the persistence layer.

Step S603: The persistence layer stores the data of the plurality of first objects.

In this embodiment, after receiving the data of the plurality of first objects, the persistence layer stores the data of the plurality of first objects.

Step S604: The service layer generates metadata of the plurality of first objects.

In this embodiment, after storing the data of the plurality of first objects, the persistence layer sends, to the service layer, storage addresses for storing the data of the plurality of first objects. The service layer generates the metadata of the plurality of first objects based on object names of the plurality of first objects and the storage addresses for storing the data.

Specifically, metadata of an object is description information of the object, and includes system metadata and user metadata. The system metadata is automatically generated by the object storage system and is used when the object data is processed. The user metadata is specified by the user when the user uploads the objects in batches, is object description information customized by the user, and may specifically include attribute, upload time, strategy information, storage address, and the like of the object. This is not specifically limited in this embodiment of this application. The user enables the atomicity on the batch operation configuration interface 700, and configures that atomicity guarantee needs to be implemented for uploading the objects in batches. The metadata layer atomically writes the metadata of the plurality of first objects to the persistence layer based on the configuration information.

Step S605: The service layer sends the metadata of the plurality of first objects.

In this embodiment, after generating the metadata of the plurality of first objects based on the storage addresses for storing the data and the object names of the plurality of first objects, the service layer sends the metadata of the plurality of first objects to the metadata layer.

Step S606: The metadata layer stores the metadata of the plurality of first objects into the persistence layer.

In this embodiment, after receiving the metadata of the plurality of first objects, the metadata layer stores the metadata of the plurality of first objects into the persistence layer.

Step S607: The metadata layer determines that metadata of at least one first object fails to be stored into the persistence layer, and sends first indication information to the service layer.

In this embodiment, the metadata layer determines that the metadata of the at least one first object fails to be stored into the persistence layer, and sends the first indication information to the service layer, where the first indication information indicates to perform garbage collection on the plurality of first objects. To be specific, garbage collection is performed on the data of the plurality of first objects that has been stored into the persistence layer, and the data is rolled back to a state in which the plurality of first objects are not uploaded. If the metadata layer determines that the metadata of the at least one first object is successfully stored into the persistence layer, the persistence layer sends a persistence address of the metadata to the metadata layer. The metadata layer records the persistence address of the metadata and sends the persistence address of the metadata to the service layer, and the service layer returns, to the client, that the objects are successfully uploaded in batches.

In this way, in this embodiment, atomicity of uploading the plurality of objects in batches is implemented based on separately writing the data and the metadata into the persistence layer in the object storage system and guarantee of atomically storing the metadata of the plurality of objects into the persistence layer.

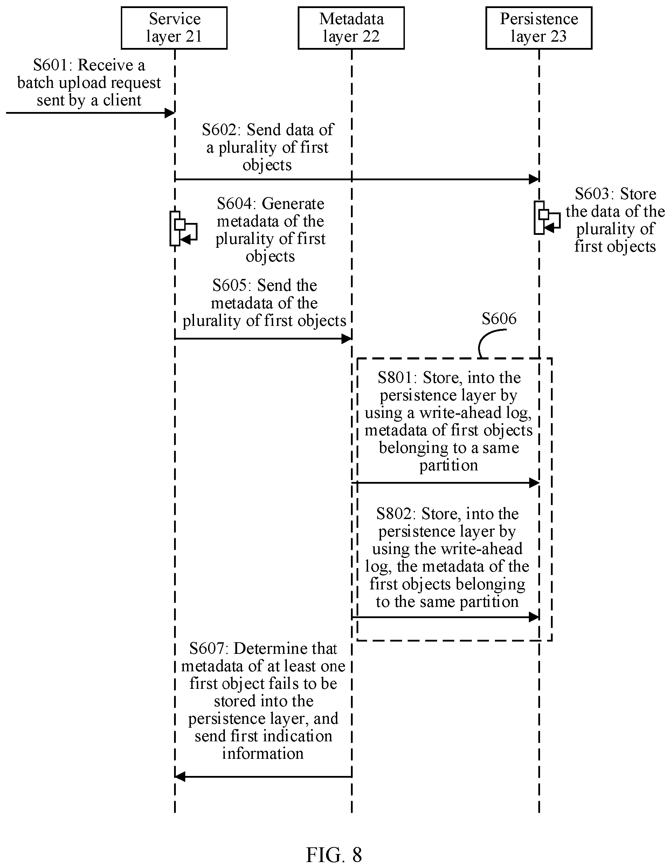

In some possible implementations, as shown in FIG. 8, performing step S606 may specifically include steps S801 and S802.

In this implementation, before storing the metadata of the plurality of first objects into the persistence layer, the metadata layer first determines partition keys of the plurality of first objects. After the partition keys of the plurality of first objects are determined to obtain partitions of the metadata of the plurality of first objects, the metadata of the plurality of first objects is stored into the persistence layer by using different atomicity strategies.

Specifically, in a partitioning technology, a partition is usually determined by using a value of an attribute of metadata or a sequentially combined value of several attributes. The value is referred to as a partition key. A partition key of each object is queried, to uniquely determine a partition in which metadata of the object is located. In this implementation, the service layer determines the partitions of the metadata of the plurality of first objects based on the partition keys of the plurality of first objects, and sends metadata of first objects belonging to a same partition to the partition. The metadata layer of the partition atomically stores the metadata of the plurality of first objects into the persistence layer.

Step S801: The metadata layer stores, into the persistence layer by using a write-ahead log, the metadata of the first objects belonging to the same partition.

In this implementation, after determining the partition keys of the plurality of first objects, the service layer stores, into the persistence layer by using the write-ahead log, the metadata of the first objects belonging to the same partition. A write-ahead log of a metadata layer of each partition records a metadata operation and a metadata record in the current partition, and then writes the metadata operation and the metadata record into a cache. After the cache is full, the metadata operation and the metadata record are persisted to the persistence layer.

Specifically, a write-ahead log of each partition is only responsible for recording an update operation on metadata belonging to the current partition. The metadata of the first objects belonging to the same partition is not directly written into the persistence layer, but is first written into the write-ahead log of the metadata layer. If metadata of at least one first object in the metadata of the first objects in the partition fails to be written into the write-ahead log, a record in the write-ahead log is ignored. If metadata of each first object in the metadata of the first objects in the partition is successfully written into the write-ahead log, the metadata of the first objects in the partition is then stored into the persistence layer based on a record in the log.

Specifically, the write-ahead log includes a redo log (redo log) and an undo log (undo log). When metadata of at least one first object in the metadata of the first objects in the partition fails to be written into the write-ahead log, restoring to a state in which the plurality of first objects are not uploaded in batches is performed based on the undo log, in other words, roll-forward restoration is performed, to guarantee atomicity of writing the metadata of the first objects in the partition.

Step S802: The metadata layer stores, into the persistence layer by using a distributed transaction, metadata of first objects belonging to different partitions.

In this implementation, after determining the partition keys of the plurality of first objects, the service layer stores, into the persistence layer based on the distributed transaction, the metadata of the first objects belonging to the different partitions. Each partition in the different partitions participates in the distributed transaction as a transaction participant, so that the metadata of the first objects in different partitions is stored into the persistence layer.

Optionally, the distributed transaction may be a two-phase transaction (two-phase commit protocol, 2PC), a three-phase transaction (three-phase commit protocol, 2PC), or a compensation transaction (try-confirm-cancel, TCC). This is not specifically limited in this embodiment of this application.

In an example, a transaction is a reliable and independent work unit that includes a set of operations, and in the work unit, all operations are either successfully performed or unsuccessfully performed. The transaction has four basic features: atomicity (atomicity), consistency (atomicity), isolation (isolation), and durability (durability), which are also referred to as an ACID feature of the transaction. The distributed transaction includes a transaction manager, a transaction coordinator, and a transaction participant. In this embodiment, the service layer may be a transaction manager, and is responsible for decision of commit and rollback of the entire distributed transaction as a global scheduler. A target participant partition may be a transaction coordinator. A transaction participant may be each participant partition, and is responsible for commit and rollback of a local transaction of the transaction participant.

In an example, the two-phase transaction is used as an example. The two-phase transaction is a two-phase commit protocol, meaning dividing an entire transaction procedure into two phases: a prepare phase (prepare phase) and a commit phase (commit phase), where 2 means two phases, P means the prepare phase, and C means the commit phase. In the prepare phase, the transaction manager sends a prepare message to each participant. Each transaction participant executes a transaction locally and writes a local undo/redo log. In this case, the transaction is not committed. In the commit phase, if receiving an execution failure or timeout message from the participant, the transaction manager directly sends a rollback (rollback) message to each transaction participant; or if the transaction manager does not receive an execution failure or timeout message from the participant, the transaction manager sends a commit (commit) message. The transaction participant performs a commit operation or a rollback operation based on the transaction manager, and releases a lock resource used in a transaction processing process.

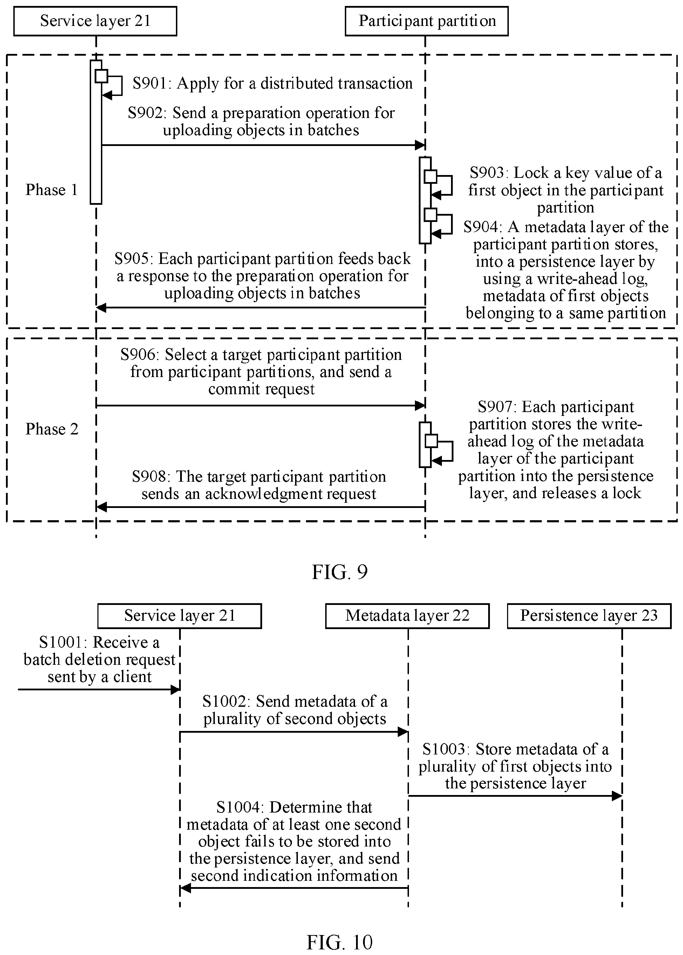

As shown in FIG. 9, performing step S802 may specifically include steps S901 to S906. Steps S901 to S905 are a phase 1 of the two-phase transaction, and steps S906 to S908 are a phase 2 of the two-phase transaction.

Step S901: The service layer applies for the distributed transaction.

Specifically, the service layer applies for the distributed transaction. The distributed transaction is successfully created, and a transaction identifier, also referred to as a transaction ID, is generated. The transaction identifier is for uniquely identifying a distributed transaction. The transaction identifier may be a unique number allocated to the distributed transaction, or may be another identifier that can uniquely represent the distributed transaction.

Step S902: The service layer sends, to each participant partition, a preparation operation for uploading objects in batches.

Specifically, after the distributed transaction is successfully created, the service layer sends, to each partition (also referred to as a participant partition) in the different partitions, the preparation operation for uploading objects in batches, that is, a transaction inquiry phase in the phase 1. The service layer sends transaction content to each participant partition, inquires whether each participant partition can perform a transaction commit operation, and starts to wait for a response from each participant partition. The transaction content is metadata of a first object in each partition, and a metadata layer of each participant partition stores the metadata of the first object in the participant partition.

Step S903: Each participant partition locks a key value of the first object in the participant partition.

Specifically, after each participant partition receives the metadata of the first object in the participant partition, before executing the transaction, each participant partition locks the key value of the first object in the participant partition, to avoid impact on a subsequent transaction execution process caused by concurrent reading and writing of the first object, and locally registers a transaction identifier. The transaction identifier is the same as an identifier that is generated after the distributed transaction is successfully created, and is for uniquely identifying the distributed transaction. A lock indicates a first object that is currently writing the participant partition.

Optionally, the lock may be one bit. The bit being a bit value 1 indicates that the lock indicates a first object that is currently writing the participant partition, and the bit being a bit value 0 indicates that the lock indicates a first object that has already written the participant partition. Alternatively, the bit being a bit value 1 indicates that the lock indicates a first object that has already written the participant partition, and the bit being a bit value 0 indicates that the lock indicates a first object that is currently writing the participant partition.

Step S904: The metadata layer of the participant partition stores, into the persistence layer by using a write-ahead log, metadata of first objects belonging to a same partition.

Specifically, after each participant partition locks the key value of the first object in the participant partition, the metadata layer of each participant partition writes the metadata of the first object in the participant partition into the write-ahead log. Writing the metadata of the first object in the participant partition is the same as step S801: The metadata layer stores, into the persistence layer by using the write-ahead log, the metadata of the first objects belonging to the same partition. Details are not described herein again.

Step S905: Each participant partition feeds back a response to the preparation operation for uploading objects in batches.

Specifically, after storing the metadata of the first object in each participant partition into the persistence layer, the participant partition feeds back, to the service layer, the response to the preparation operation for batch upload. If the metadata of the first object in each participant partition is successfully stored into the persistence layer, the participant partition feeds back to the service layer that a commit request is agreed on, and transaction commit in the phase 2 continues to be performed. If the metadata of the first object in at least one of each participant partition fails to be stored into the persistence layer, and no commit request is fed back to the service layer, the transaction is rolled back.

Step S906: Select a target participant partition from the participant partitions, and send a commit request.

Specifically, after receiving, from the participant partition, the response to the preparation operation for uploading objects in batches, the service layer selects the target participant partition from the participant partitions, and sends the commit request as the transaction coordinator.

Step S907: Each participant partition stores the write-ahead log of the metadata layer of the participant partition into the persistence layer, and releases a lock.

Specifically, the target participant partition sends a ready-to-commit request to another participant partition. After receiving the ready-to-commit request, each participant partition formally performs a transaction commit operation, to be specific, stores the write-ahead log of the metadata layer of the participant partition into the persistence layer. After storing the write-ahead log of the metadata layer of the participant partition into the persistence layer, the participant partition releases the lock on the key value of the first object in the participant partition. In addition, other transaction resources occupied during the entire transaction are released.

Step S908: The target participant partition sends an acknowledgment request.

Specifically, after each participant partition completes asynchronous transaction commit, the target participant partition sends the acknowledgment request to the service layer, to complete the distributed transaction. In addition, the service layer sends a commit end request to each participant partition, and deregisters the transaction identifier of the distributed transaction. In other words, the metadata layer completes storing, into the persistence layer by using the distributed transaction, the metadata of the first objects belonging to different partitions.

In this way, in this embodiment, in an operation for uploading objects in batches, for object metadata in a same partition, a batch object atomic operation is guaranteed by using the write-ahead log, and for writing of object metadata in different partitions, each partition in different partitions is used as a whole to participate in the distributed transaction, so as to implement a batch object atomic operation. In this way, a quantity of distributed transaction participants is greatly reduced, and this help stabilize performance of the distributed transaction.

In some possible implementations, as shown in FIG. 10, the data processing method further includes steps S1001 to S1004.

Step S1001: The service layer receives a batch deletion request sent by the client.

In this embodiment, the service layer receives the batch deletion request from the client. The batch deletion request indicates to delete a plurality of second objects. The batch deletion request may carry object names of a plurality of to-be-deleted second objects.

Step S1002: The service layer sends metadata of the plurality of second objects to the metadata layer.

In this embodiment, after receiving the batch deletion request from the client, the service layer generates, in response to the batch deletion request, the metadata of the plurality of second objects by using the object names of the plurality of to-be-deleted second objects, and sends the metadata of the second objects to the metadata layer. The metadata of the plurality of second objects includes a delete marker (delete marker). The delete marker includes a key value of a to-be-deleted second object, and indicates to delete the object.

Step S1003: The metadata layer stores the metadata of the plurality of second objects into the persistence layer.

In this embodiment, after receiving the metadata of the second objects, the metadata layer stores the metadata of the plurality of second objects into the persistence layer. Specifically, first, the service layer determines partition keys of the plurality of second objects. The metadata layer stores, into the persistence layer by using a write-ahead log, metadata of second objects belonging to a same partition. The metadata layer stores, into the persistence layer by using a distributed transaction, metadata of second objects belonging to different partitions. Execution of specific steps is the same as step S801 and step S802. Details are not described herein again.

Step S1004: The metadata layer determines that metadata of at least one second object fails to be stored into the persistence layer, and sends second indication information to the service layer.

In this embodiment, the metadata layer determines that the metadata of the at least one second object fails to be stored into the persistence layer, and sends the second indication information to the service layer. The second indication information indicates to give up performing garbage collection on data of the plurality of second objects, that is, give up deleting the plurality of second objects. If the metadata layer determines that the metadata of the at least one second object is successfully stored into the persistence layer, the service layer returns, to the client, that the objects are successfully deleted in batches.

Specifically, after the persistence layer stores the metadata of the plurality of second objects, the persistence layer marks the plurality of second objects as unavailable, and the data is not immediately deleted from the persistence layer. In a distributed storage system, garbage collection (garbage collection, GC) is usually used. The system periodically scans a storage device, marks deleted or expired data as garbage data, and deletes the garbage data or moves the garbage data to a garbage collection region to collect the garbage data. The GC can be implemented through periodic cleanup or triggered cleanup.

In this way, in this embodiment, atomicity of deleting the plurality of objects in batches is implemented based on separately writing the data and the metadata into the persistence layer in the object storage system and guarantee of atomically storing the metadata of the plurality of objects into the persistence layer.

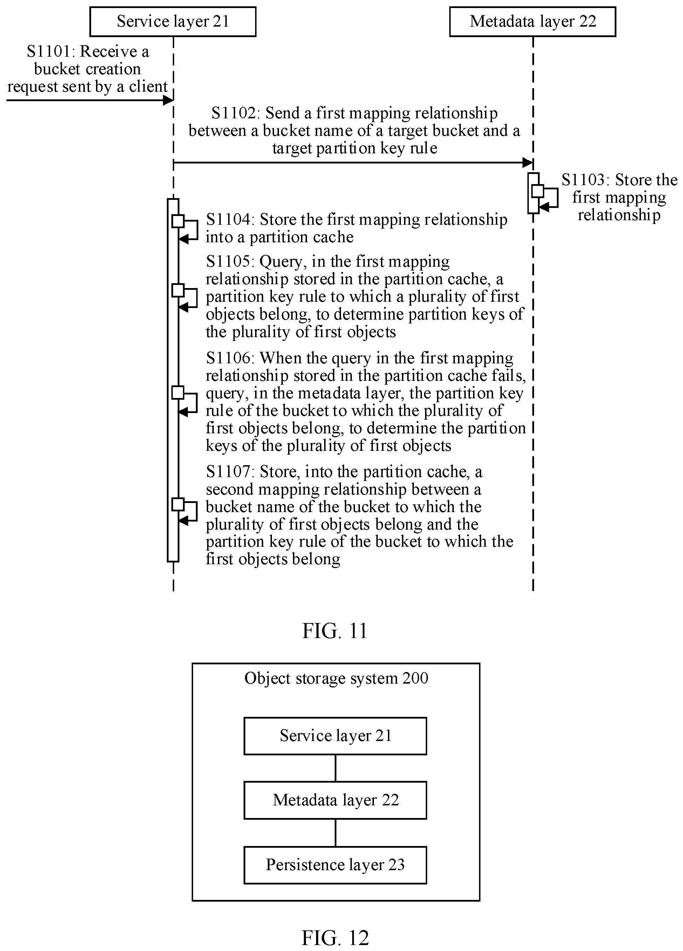

In some possible implementations, as shown in FIG. 11, that the service layer determines the partition keys of the plurality of first objects may specifically include steps S1101 to S1105.

Step S1101: The service layer receives a bucket creation request sent by the client.

In this implementation, the user may customize a partition key rule when creating a bucket, and the service layer receives the bucket creation request sent by the client. The bucket creation request may carry a bucket name, a region, and a partition key rule. The partition key rule is configured by the user, and is a rule predefined by the user. For example, the partition key rule may include a bucket name prefix or an object name prefix.

In an example, the partition key rule may include three characters of a bucket name prefix and four characters of an object name prefix. For example, {[{type: bucketprefix, len: 3}, {type: objprefix, len: 4}]} indicates that a partition key includes three characters of a bucket name prefix and four characters of a bucket name prefix. After the partition key rule is configured, metadata of different objects may be in a same partition or different partitions.

Optionally, the user may not configure a partition key rule. After receiving the bucket creation request, the service layer parses out that the partition key rule is of a default type, for example, {type: null}, and in this case, the service layer uses a bucket name and an object name as the partition key.

Step S1102: The service layer sends, to the metadata layer, a first mapping relationship between a bucket name of a target bucket and a target partition key rule.

In this implementation, after receiving the name of the target bucket and the target partition key rule that are included in the bucket creation request sent by the client, the service layer sends, to the metadata layer, the first mapping relationship between the name of the target bucket and the target partition key rule.

Step S1103: The metadata layer stores the first mapping relationship.

In this implementation, after receiving the first mapping relationship between the bucket name of the target bucket and the target partition key rule, the metadata layer stores the first mapping relationship into bucket metadata, where the bucket metadata may be bucket metadata 222.

Step S1104: The service layer stores the first mapping relationship into a partition cache.

In this implementation, the service layer includes the partition cache, configured to cache the partition key rule configured by the user. Because the partition key rule in the bucket metadata of the metadata layer is not allowed to be modified, the partition cache is newly added to the service layer, so as to avoid accessing the bucket metadata on each read request of the partition key. After successfully storing the first mapping relationship into the bucket metadata, the metadata layer sends storage success information to the service layer. After receiving the storage success information, the service layer stores the first mapping relationship into the partition cache.

Step S1105: The service layer queries, in the first mapping relationship stored in the partition cache, a partition key rule of a bucket to which the plurality of first objects belong, to determine the partition keys of the plurality of first objects.

In this implementation, when determining the partition keys of the plurality of objects, the service layer first queries, in the first mapping relationship stored in the partition cache at the service layer, the partition key rule of the bucket to which the plurality of first objects belong, to determine the partition keys of the plurality of first objects. The service layer determines, based on the found partition keys of the plurality of first objects, a partition to which each first object belongs.

Step S1106: Upon a lookup miss on the first mapping relationship stored in the partition cache, the service layer queries, in the metadata layer, the partition key rule of the bucket to which the plurality of first objects belong, to determine the partition keys of the plurality of first objects.

In this implementation, if lookup miss occurs on the first mapping relationship stored in the partition cache, the service layer continues to query, in the metadata layer, the partition key rule of the bucket to which the plurality of first objects belong, to determine the partition keys of the plurality of first objects.

Step S1107: The service layer stores, into the partition cache, a second mapping relationship between a bucket name of the bucket to which the plurality of first objects belong and the partition key rule of the bucket to which the first objects belong.

In this implementation, after querying, in the metadata layer, the partition key rule of the bucket to which the plurality of first objects belong, the service layer stores, into the partition cache, the second mapping relationship between the bucket name of the bucket to which the plurality of first objects belong and the partition key rule of the bucket to which the first objects belong. In this way, the partition cache can be accessed for a next read/write request of the partition key, and the partition key rule of the bucket to which the plurality of first objects belong is queried.

In this way, in this implementation, the user may configure the partition key rule when creating the bucket, and the service layer stores the partition key rule into the partition cache, to avoid accessing the bucket metadata on each read request of the partition key, so that overheads for accessing the metadata layer are reduced, and read performance of the partition key is improved.

In the foregoing embodiments, the data processing method in an object storage system 200 may be software configured on a computing device or a computing device cluster. In addition, the software is run on the computing device or the computing device cluster, so that the computing device or the computing device cluster can implement a function of the object storage system 200. The following describes in detail the object storage system 200 in a batch object operation process.

As shown in FIG. 12, the object storage system 200 includes a service layer 21, a metadata layer 22, and a persistence layer 23.

The service layer 21 is configured to: receive a batch upload request sent by a client, where the batch upload request indicates a plurality of to-be-uploaded first objects; send data of the plurality of first objects to the persistence layer; and generate metadata of the plurality of first objects, and send the metadata of the plurality of first objects to the metadata layer.

The persistence layer 23 is configured to store the data of the plurality of first objects.

The metadata layer 22 is configured to: store the metadata of the plurality of first objects into the persistence layer; and determine that metadata of at least one first object fails to be stored into the persistence layer, and send first indication information to the service layer, where the first indication information indicates to perform garbage collection on the plurality of first objects.

In some possible implementations, the service layer 21 is further configured to determine partition keys of the plurality of first objects, where the partition keys indicate partitions of the metadata of the plurality of first objects.

The metadata layer 22 is specifically configured to store the metadata of the plurality of first objects into the persistence layer based on the partition keys of the plurality of first objects.

In some possible implementations, the metadata layer 22 is configured to: store, into the persistence layer by using a write-ahead log, metadata of first objects belonging to a same partition; and store, into the persistence layer by using a distributed transaction, metadata of first objects belonging to different partitions.

In some possible implementations, the service layer 21 is configured to determine the partition keys of the plurality of first objects according to a partition key rule of a bucket to which the plurality of first objects belong.

In some possible implementations, the service layer 21 is further configured to: before determining the partition keys of the plurality of first objects according to the partition key rule of the bucket to which the plurality of first objects belong, receive a bucket creation request sent by the client, where the bucket creation request includes a bucket name of a target bucket and a target partition key rule; and send, to the metadata layer, a first mapping relationship between the bucket name of the target bucket and the target partition key rule.

The metadata layer 22 is further configured to store the first mapping relationship.

In some possible implementations, the service layer 21 is further configured to: receive a batch deletion request sent by the client, where the batch deletion request indicates a plurality of to-be-deleted second objects; and send metadata of the plurality of second objects to the metadata layer, where the metadata of the plurality of second objects includes a delete marker.

The metadata layer 22 is further configured to: store the metadata of the plurality of second objects into the persistence layer; and determine that metadata of at least one second object fails to be stored into the persistence layer, and send second indication information to the service layer, where the second indication information indicates to give up performing garbage collection on data of the plurality of second objects.

In some possible implementations, the service layer 21 is further configured to store the first mapping relationship into the partition cache.

In some possible implementations, the service layer 21 is configured to: query, in the first mapping relationship stored in the partition cache, the partition key rule of the bucket to which the plurality of first objects belong, to determine the partition keys of the plurality of first objects.

In some possible implementations, the service layer 21 is further configured to: upon a lookup miss on the first mapping relationship stored in the partition cache, query, in the metadata layer, the partition key rule of the bucket to which the plurality of first objects belong, to determine the partition keys of the plurality of first objects.

The service layer 21, the metadata layer 22, and the persistence layer 23 may all be implemented by software, or may be implemented by hardware. For example, the following uses the service layer 21 as an example to describe an implementation of the service layer 21. Similarly, for implementations of the metadata layer 22 and the persistence layer 23, refer to the implementation of the service layer 21.

A module is used as an example of a software functional unit, and the service layer 21 may include code running on a computing instance. The computing instance may include at least one of a physical host (a computing device), a virtual machine, and a container. Further, there may be one or more computing instances. For example, the service layer 21 may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud VPC, or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

A module is used as an example of a hardware functional unit, and the service layer 21 may include at least one computing device, for example, a server. Alternatively, the service layer 21 may be a device implemented by using an application-specific integrated circuit ASIC, a programmable logic device PLD, or the like. The PLD may be implemented by a CPLD, an FPGA, GAL, or any combination thereof.

A plurality of computing devices included in the service layer 21 may be distributed in a same region, or may be distributed in different regions. The plurality of computing devices included in the service layer 21 may be distributed in a same AZ, or may be distributed in different AZs. Similarly, the plurality of computing devices included in the service layer 21 may be distributed on a same VPC, or may be distributed on a plurality of VPCs. The plurality of computing devices may be any combination of computing devices such as a server, an ASIC, a PLD, a CPLD, an FPGA, and GAL.

It should be noted that in another embodiment, the service layer 21 may be configured to perform any step in the data processing method, the metadata layer 22 may be configured to perform any step in the data processing method, the persistence layer 23 may be configured to perform any step in the data processing method. Steps implemented by the service layer 21, the metadata layer 22, and the persistence layer 23 may be specified as required. The service layer 21, the metadata layer 22, and the persistence layer 23 respectively implement different steps in the data processing method to implement all functions of the object storage system 200.

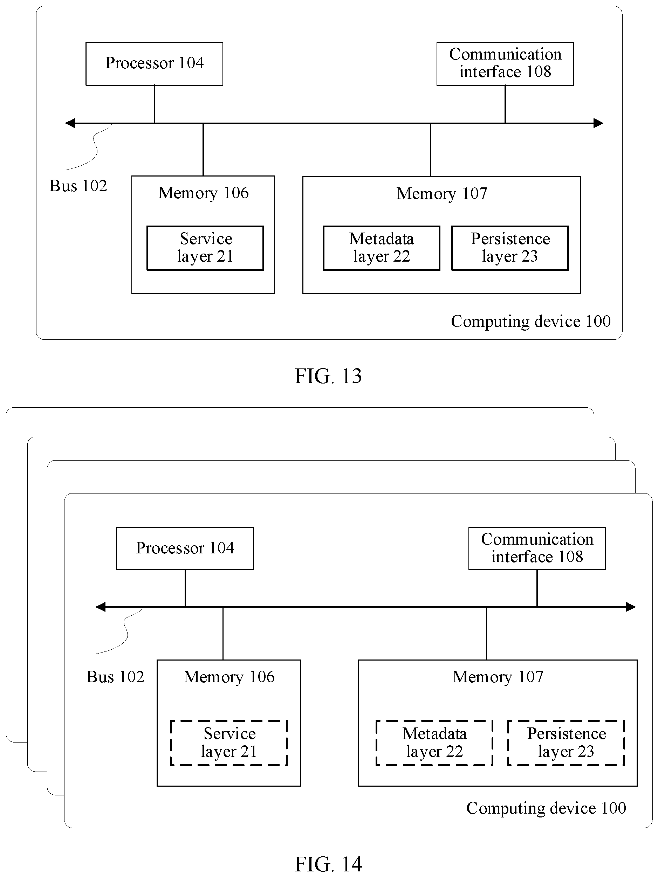

FIG. 13 is a diagram of a structure of a computing device. The foregoing object storage system 200 may be deployed on the computing device. The computing device may be a computing device (for example, a server) in a cloud environment, a computing device in an edge environment, a terminal device, or the like, and may be specifically configured to implement functions of the service layer 21, the metadata layer 22, and the persistence layer 23 in the object storage system 200 in embodiments shown in FIG. 6 and FIG. 8 to FIG. 11.

As shown in FIG. 13, the computing device 100 includes a bus 102, a processor 104, a memory 106, a memory 107, and a communication interface 108. The processor 104, the memory 106, the memory 107, and the communication interface 108 communicate with each other via the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one line is used to represent the bus in FIG. 13, but this does not mean that there is only one bus or only one type of bus. The bus 102 may include a path for transferring information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM).

The memory 107 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 and the memory 107 store executable program code. The processor 104 executes the executable program code to separately implement functions of the service layer 21, the metadata layer 22, and the persistence layer 23, to implement a data processing method. In other words, the memory 106 stores instructions for performing a data processing method.

The communication interface 108 implements communication between the computing device 100 and another device or a communication network by using a transceiver module, for example, but not limited to a network interface card or a transceiver.

Specifically, when embodiments shown in FIG. 6 and FIG. 8 to FIG. 11 are implemented, and the object storage system 200 described in embodiments shown in FIG. 6 and FIG. 8 to FIG. 11 is implemented by software, software or program code required for performing functions of the object storage system 200 in FIG. 6 and FIG. 8 to FIG. 11 is stored in the memory 106 and the memory 107, interaction between the object storage system 200 and another device is implemented through the communication interface 103, and the processor 104 is configured to execute the instructions in the memory 106 and the memory 107, to implement the method performed by the object storage system 200.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 14, the computing device cluster includes at least one computing device 100. A memory 106 and a memory 107 in one or more computing devices 100 in the computing device cluster may store same instructions for performing a data processing method.

Alternatively, in some possible implementations, the memory 106 and the memory 107 in the one or more computing devices 100 in the computing device cluster may respectively store some instructions for performing a data processing method. In other words, a combination of the one or more computing devices 100 may jointly execute instructions for performing a data processing method.

It should be noted that a memory 106 and a memory 107 in different computing devices 100 in the computing device cluster may store different instructions, and are respectively for executing some functions of an object storage system. In other words, instructions stored in a memory 106 and a memory 107 in different computing devices 100 may implement functions of one or more modules in a service layer 21, a metadata layer 22, and a persistence layer 23.

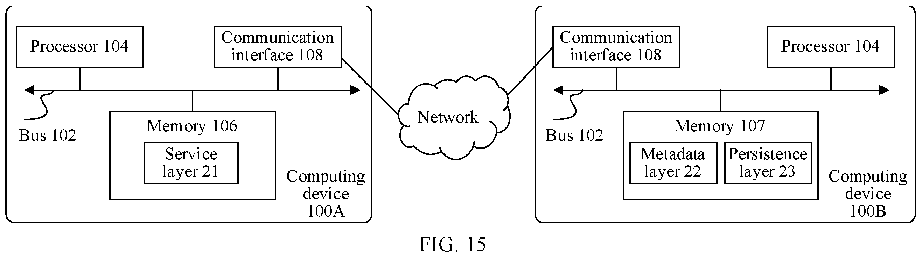

In some possible implementations, the one or more computing devices in the computing device cluster may be connected via a network. The network may be a wide area network, a local area network, or the like. FIG. 15 shows a possible implementation. As shown in FIG. 15, two computing devices 100A and 100B are connected via a network. Specifically, each computing device is connected to the network through a communication interface in the computing device. In this possible implementation, a memory 106 in the computing device 100A stores instructions for performing a function of the service layer 21. In FIG. 15, an example in which the memory 106 in the computing device 100A stores instructions for performing a function of the service layer 21 is used. In addition, a memory 107 in the computing device 100B stores instructions for performing functions of the metadata layer 22 and the persistence layer 23. In FIG. 15, an example in which the memory 107 in the computing device 100B stores the instructions for performing the functions of the metadata layer 22 and the persistence layer 23 is used.

It should be understood that functions of the computing device 100A shown in FIG. 15 may alternatively be completed by a plurality of computing devices 100. Similarly, functions of the computing device 100B may alternatively be completed by a plurality of computing devices 100.

An embodiment of this application further provides a computer program product including instructions. The computer program product may be software or a program product that includes the instructions and that can run on a computing device or can be stored in any usable medium. When the computer program product runs on at least one computing device, the at least one computing device is caused to perform a data processing method or the data processing method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions indicate the computing device to perform a data processing method, or indicate the computing device to perform the data processing method.

Finally, it should be noted that the foregoing embodiments are merely used for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof. Such modifications or equivalent replacements do not cause corresponding technical solutions to depart from the protection scope of the technical solutions in embodiments of the present invention.

## Claims

1. An object storage system, wherein the object storage system is configured to provide an object storage service by using at least one bucket, and the object storage system comprises a service layer, a persistence layer, and a metadata layer, wherein
the service layer is configured to: receive a batch upload request sent by a client, wherein the batch upload request indicates a plurality of to-be-uploaded first objects; send data of the plurality of first objects to the persistence layer; and generate metadata of the plurality of first objects, and send the metadata of the plurality of first objects to the metadata layer;
the persistence layer is configured to store the data of the plurality of first objects; and
the metadata layer is configured to: store the metadata of the plurality of first objects into the persistence layer; and determine that metadata of at least one first object fails to be stored into the persistence layer, and send first indication information to the service layer, wherein the first indication information indicates to perform garbage collection on the plurality of first objects.

2. The object storage system according to claim 1, wherein
the service layer is further configured to determine partition keys of the plurality of first objects, wherein the partition keys indicate partitions of the metadata of the plurality of first objects; and
the metadata layer is specifically configured to store the metadata of the plurality of first objects into the persistence layer based on the partition keys of the plurality of first objects.

3. The object storage system according to claim 1 or 2, wherein
the metadata layer is configured to: store, into the persistence layer by using a write-ahead log, metadata of first objects belonging to a same partition; and store, into the persistence layer by using a distributed transaction, metadata of first objects belonging to different partitions.

4. The object storage system according to claim 2 or 3, wherein
the service layer is configured to determine the partition keys of the plurality of first objects according to a partition key rule of a bucket to which the plurality of first objects belong.

5. The object storage system according to claim 4, wherein
the service layer is further configured to: before determining the partition keys of the plurality of first objects according to the partition key rule of the bucket to which the plurality of first objects belong, receive a bucket creation request sent by the client, wherein the bucket creation request comprises a bucket name of a target bucket and a target partition key rule; and send, to the metadata layer, a first mapping relationship between the bucket name of the target bucket and the target partition key rule; and
the metadata layer is further configured to store the first mapping relationship.

6. The object storage system according to any one of claims 1 to 5, wherein
the service layer is further configured to: receive a batch deletion request sent by the client, wherein the batch deletion request indicates a plurality of to-be-deleted second objects; and send metadata of the plurality of second objects to the metadata layer, wherein the metadata of the plurality of second objects comprises a delete marker; and
the metadata layer is further configured to: store the metadata of the plurality of second objects into the persistence layer; and determine that metadata of at least one second object fails to be stored into the persistence layer, and send second indication information to the service layer, wherein the second indication information indicates to give up performing garbage collection on data of the plurality of second objects.

7. The object storage system according to claim 5, wherein the service layer further comprises a partition cache; and
the service layer is further configured to store the first mapping relationship into the partition cache.

8. The object storage system according to either claim 1 or 8, wherein
the service layer is configured to: query, in the first mapping relationship stored in the partition cache, the partition key rule of the bucket to which the plurality of first objects belong, to determine the partition keys of the plurality of first objects.

9. The object storage system according to claim 8, wherein
the service layer is further configured to: upon a lookup miss on the first mapping relationship stored in the partition cache, query, in the metadata layer, the partition key rule of the bucket to which the plurality of first objects belong, to determine the partition keys of the plurality of first objects.

10. A data processing method, wherein the method is applied to an object storage system, the object storage system is configured to provide an object storage service by using at least one bucket, the object storage system comprises a service layer, a persistence layer, and a metadata layer, and the method comprises:
receiving, by the service layer, a batch upload request sent by a client, wherein the batch upload request indicates a plurality of to-be-uploaded first objects;
sending, by the service layer, data of the plurality of first objects to the persistence layer;
storing, by the persistence layer, the data of the plurality of first objects;
generating, by the service layer, metadata of the plurality of first objects, and sending the metadata of the plurality of first objects to the metadata layer;
storing, by the metadata layer, the metadata of the plurality of first objects into the persistence layer; and
determining that metadata of at least one first object fails to be stored into the persistence layer, and sending, by the metadata layer, first indication information to the service layer, wherein the first indication information indicates to perform garbage collection on the plurality of first objects.

11. The method according to claim 10, wherein the method further comprises:
determining, by the service layer, partition keys of the plurality of first objects, wherein the partition keys indicate partitions of the metadata of the plurality of first objects.

12. The method according to claim 10 or 11, wherein storing, by the metadata layer, the metadata of the plurality of first objects into the persistence layer comprises:
storing, by the metadata layer into the persistence layer by using a write-ahead log, metadata of first objects belonging to a same partition; and
storing, by the metadata layer into the persistence layer by using a distributed transaction, metadata of first objects belonging to different partitions.

13. The method according to claim 11 or 12, wherein determining, by the service layer, the partition keys of the plurality of first objects comprises:
determining, by the service layer, the partition keys of the plurality of first objects according to a partition key rule of a bucket to which the plurality of first objects belong.

14. The method according to claim 13, wherein the method further comprises:
before determining the partition keys of the plurality of first objects according to the partition key rule of the bucket to which the plurality of first objects belong, receiving, by the service layer, a bucket creation request sent by the client, wherein the bucket creation request comprises a bucket name of a target bucket and a target partition key rule;
sending, by the service layer to the metadata layer, a first mapping relationship between the bucket name of the target bucket and the target partition key rule; and
storing, by the metadata layer, the first mapping relationship.

15. The method according to any one of claims 10 to 14, wherein the method further comprises:
receiving, by the service layer, a batch deletion request sent by the client, wherein the batch deletion request indicates a plurality of to-be-deleted second objects;
sending, by the service layer, metadata of the plurality of second objects to the metadata layer, wherein the metadata of the plurality of second objects comprises a delete marker;
storing, by the metadata layer, the metadata of the plurality of second objects into the persistence layer; and
determining that metadata of at least one second object fails to be stored into the persistence layer, and sending, by the metadata layer, second indication information to the service layer, wherein the second indication information indicates to give up performing garbage collection on data of the plurality of second objects.

16. The method according to claim 14, wherein the service layer further comprises a partition cache, and the method further comprises:
storing, by the service layer, the first mapping relationship into the partition cache.

17. The method according to either claim 10 or 16, wherein determining, by the service layer, the partition keys of the plurality of first objects comprises:
querying, by the service layer in the first mapping relationship stored in the partition cache, the partition key rule of the bucket to which the plurality of first objects belong, to determine the partition keys of the plurality of first objects.

18. The object storage system according to claim 17, wherein the method further comprises:
upon a lookup miss on the first mapping relationship stored in the partition cache, querying, in the metadata layer by the service layer, the partition key rule of the bucket to which the plurality of first objects belong, to determine the partition keys of the plurality of first objects.

19. A computing device cluster, comprising at least one computing device, wherein each computing device comprises a processor and a memory; and
a processor of the at least one computing device is configured to execute instructions stored in a memory of the at least one computing device, to cause the computing device cluster to perform the method according to any one of claims 1 to 9.

20. A computer program product comprising instructions, wherein when the instructions are run by a computing device cluster, the computing device cluster is caused to perform the method according to any one of claims 1 to 9.

21. A computer-readable storage medium, comprising computer program instructions, wherein when the computer program instructions are executed by a computing device cluster, the computing device cluster performs the method according to any one of claims 1 to 9.
